# EUROPÄISCHE PATENTSCHRIFT

(11) **EP 2 696 709 B1**
(45) Veröffentlichungstag und Bekanntmachung des Hinweises auf die Patenterteilung: **30.03.2016**
(21) Anmeldenummer: 12714962.3
(22) Anmeldetag: 02.04.2012
(51) Int. Cl.: A24C 5/47, A24C 5/32, B65G 29/00

(54) **FÖRDERUNG VON STABFÖRMIGEN ARTIKELN DER TABAK VERARBEITENDEN INDUSTRIE**
CONVEYING ROD-SHAPED ARTICLES OF THE TOBACCO PROCESSING INDUSTRY
TRANSPORT D'ARTICLES EN FORME DE TIGE DE L'INDUSTRIE DE TRANSFORMATION DU TABAC

(30) Priorität: 14.04.2011 DE 102011007430
(43) Veröffentlichungstag der Anmeldung: 19.02.2014
(73) Patentinhaber: Hauni Maschinenbau AG, 21033 Hamburg (DE)
(72) Erfinder: FOLGER, Manfred, 21035 Hamburg (DE); SCHLISIO, Siegfried, 21502 Geesthacht (DE); KLEINE WÄCHTER, Michael, 23881 Lankau (DE)
(74) Vertreter: Seemann & Partner
(86) Internationale Anmeldenummer: PCT/EP2012/001451
(87) Internationale Veröffentlichungsnummer: WO 2012/139718

(56) Entgegenhaltungen:
- EP-A1- 1 475 002
- EP-A2- 1 518 468
- DE-A1- 2 346 097

## Beschreibung

Die Erfindung betrifft ein Verfahren zum Fördern von stabförmigen Artikeln der Tabak verarbeitenden Industrie, insbesondere Filterzigaretten oder deren stabförmigen Komponenten, wobei die stabförmigen Artikel in Aufnahmemulden von Fördertrommeln unter Rotation der Fördertrommeln queraxial gefördert werden, wobei die um jeweils eine eigene Rotationsachse rotierenden oder rotierbaren Fördertrommeln in queraxialer Förderrichtung der stabförmigen Artikel hintereinander angeordnet sind, wobei die in wenigstens einer Reihe queraxial hintereinander angeordneten stabförmigen Artikel von einer Fördertrommel an eine nachfolgende Fördertrommel übergeben werden.

In Maschinen der Tabak verarbeitenden Industrie, insbesondere Filteransetzmaschinen, werden Fördertrommeln eingesetzt, um Zigaretten, Filterstücke oder deren Komponenten zu transportieren. Unter dem Begriff "Komponenten" von den Zigaretten und Filterstäben werden im Sinne der Erfindung auch Abschnitte von Papier und dergleichen aus flächigem und/oder bahnförmigem Material verstanden, z.B. Abschnitte und/oder Bahnen von Zigarettenpapier, Filterpapier oder Belagpapier zum Verbinden von Tabakstücken mit Filterstopfen.

Das Fördern der vorgenannten Gegenstände während der Herstellung von Zigaretten, Filtern sowie Filterzigaretten wird bei modernen Produktionsmaschinen der Tabak verarbeitenden Industrie im Allgemeinen mittels Fördertrommeln durchgeführt, deren Mantelfläche zum Fördern von stabförmigen Gegenständen als stabförmige Komponenten (Zigaretten, Filterstäben oder Filterstopfen, Filterzigaretten) mit Mulden zum Aufnehmen der Gegenstände versehen sind. Zum Fördern von blattförmigen und/oder bahnförmigen Gegenständen (Belagpapierabschnitte und/oder -bahnen) sind Fördertrommeln vorgesehen, deren Mantelflächen im Wesentlichen glatt ist.

Während der Förderung werden diese Gegenstände der Tabak verarbeitenden Industrie von Saugluft auf den Fördertrommeln gehalten, die an entsprechenden Kanälen, meist Bohrungen, anliegt. Diese Kanäle sind im Allgemeinen in Reihen angeordnet, deren Längen den Abmessungen der zu transportierenden Gegenstände quer zur Transportrichtung entsprechen.

In Filteransetzmaschinen werden auf den Fördertrommeln stabförmige Artikel, wie z.B. Tabakstöcke oder Filterstopfen bzw. Filterstäbe, queraxial in Aufnahmemulden der Fördertrommel gefördert. Hierbei sind die Aufnahmemulden in vorbestimmten Teilungsabständen auf der Umfangsfläche der Fördertrommel angeordnet.

Unter Teilungsabstand wird der queraxiale Abstand der Aufnahmemulden verstanden. Der Abstand wird dabei vom Muldenmittelpunkt der Aufnahmemulde zum darauffolgenden Muldenmittelpunkt der benachbarten Aufnahmemulde des auf der Oberfläche die stabförmigen Rauchartikel(gruppen) transportierenden Muldenförderers oder von Muldengrund zu Muldengrund bei z.B. einer prismenförmigen Aufnahmemulde gemessen. Der Teilungsabstand bei einem Trommelförderer, auch als Fördertrommel bezeichnet, ist der queraxiale Abstand bzw. die Länge des (Kreis-)Bogens zwischen (benachbarten) Muldenmittelpunkten auf der Kreislinie, auf der die Muldenmittelpunkte bzw. Muldenmittelpunktsachsen der Mulden angeordnet sind.

In EP-A-1 518 468 ist eine Fördertrommel mit einer Spanneinrichtung offenbart, so dass ein Trommelkörper der Fördertrommel gegen einen anderen Trommelkörper austauschbar ist. Darüber hinaus ist eine Maschine der Tabak verarbeitenden Industrie offenbart, die entsprechende Fördertrommeln mit einer Spanneinrichtung aufweist.

Überdies ist in DE-A-23 46 097 eine Vorrichtung zum Herumwickeln von Verbindungsblättchen um eine Rauchartikelgruppe beschrieben, wobei die Rauchartikelgruppen auf einen als Rollfläche ausgebildeten Förderer gefördert werden. Hierbei weist der Rollförderer eine Rollfläche für jeweils eine Rauchartikelgruppe auf, wobei die Rollfläche durch flache Mulden in Umfangsrichtung begrenzt ist.

Außerdem offenbart EP-A-1 475 002 eine Maschine der Tabak verarbeitenden Industrie, wobei für zwei Rauchartikelgruppen jeweils eine Belageinrichtung, die in Förderrichtung hintereinander angeordnet ist, und eine gemeinsame Rolleinrichtung vorgesehen sind.

Ausgehend von diesem Stand der Technik besteht die Aufgabe der vorliegenden Erfindung darin, an einer Maschine der Tabak verarbeitenden Industrie, beispielsweise einer Filteransetzmaschine, einen Durchmesserformatwechsel auf einfache Weise zu ermöglichen, wobei der konstruktive Aufwand möglichst gering gehalten werden soll.

Die Aufgabe wird gelöst durch ein Verfahren zum Fördern von stabförmigen Artikeln der Tabak verarbeitenden Industrie, insbesondere Filterzigaretten oder deren stabförmigen Komponenten, wobei die stabförmigen Artikel in Aufnahmemulden von Fördertrommeln unter Rotation der Fördertrommeln queraxial gefördert werden, wobei die um jeweils eine eigene Rotationsachse rotierenden oder rotierbaren Fördertrommeln in queraxialer Förderrichtung der stabförmigen Artikel hintereinander angeordnet sind, wobei die in wenigstens einer Reihe queraxial hintereinander angeordneten stabförmigen Artikel von einer Fördertrommel an eine nachfolgende Fördertrommel übergeben werden, wobei das Verfahren dadurch weitergebildet wird, dass bei einem Wechsel der zu fördernden stabförmigen Artikel von stabförmigen Artikeln einer ersten Art mit einem vorbestimmten Durchmesser zu stabförmigen Artikeln einer zweiten Art mit einem vorbestimmten Durchmesser, wobei der Durchmesser der Artikel der ersten Art und der Durchmesser der Artikel der zweiten Art sich voneinander unterscheiden, eine für die Förderung der stabförmigen Artikel vorgesehene Fördertrommel beibehalten wird und eine zur beibehaltenen Fördertrommel benachbarte, insbesondere stabförmige Artikel abgebende oder stabförmige Artikel aufnehmende, erste austauschbare Fördertrommel durch eine zweite austauschbare Fördertrommel ausgetauscht wird, so dass bei Förderung von stabförmigen Artikeln der ersten Art die Teilkreisbögen oder Kreisbögen der Mittenlängsachsen der stabförmigen Artikel der ersten Art auf der beibehaltenen Fördertrommel und die Teilkreisbögen sowie Kreisbögen der Mittenlängsachsen der stabförmigen Artikel der ersten Art auf der ersten austauschbaren Fördertrommel im Übergabebereich sich berühren und nach einem Austausch der austauschbaren Fördertrommel durch die zweite austauschbare Fördertrommel bei Förderung von stabförmigen Artikeln der zweiten Art die Teilkreisbögen oder Kreisbögen der Mittenlängsachsen der stabförmigen Artikel der zweiten Art auf der beibehaltenen Fördertrommel und die Teilkreisbögen oder Kreisbögen der Mittenlängsachsen der stabförmigen Artikel der zweiten Art auf der zweiten austauschbaren Fördertrommel im Übergabebereich sich berühren.

Die Erfindung beruht hierbei auf dem Gedanken, dass bei einer Maschine der Tabak verarbeitenden Industrie, bei der die stabförmigen Artikel unter Verwendung von Fördertrommeln queraxial gefördert werden, teilweise ein Austausch von Fördertrommeln an der Maschine erfolgt, wenn ein Formatwechsel, d.h. ein Wechsel der zu fördernden Artikel, die sich im Durchmesser unterscheiden, durchgeführt wird oder ist. Gemäß der Erfindung wird ein Teil der verwendeten Fördertrommeln nicht ausgetauscht d.h. beibehalten, da beispielsweise in einem Trommellauf gemäß der Erfindung jede zweite Fördertrommel ausgetauscht wird.

Erfindungsgemäß werden beispielsweise teurere und konstruktiv aufwändige Fördertrommeln, wie z.B. eine Laserperforationstrommel oder Lasertrommel, auf der Filterzigaretten mit einer Perforation versehen werden, beibehalten und nicht ausgetauscht.

Auf den beibehaltenen Fördertrommeln werden hierbei die stabförmigen Artikel der ersten Art und die stabförmigen Artikel der zweiten Art jeweils gefördert, wobei die jeweils ausgetauschte Fördertrommel derart ausgebildet ist, dass die stabförmigen Artikel ohne mechanische Beeinträchtigung von beibehaltener Fördertrommel zu ausgetauschter Fördertrommel oder von austauschbarer Fördertrommel zu beibehaltener Fördertrommel nach einem Formatwechsel transportiert werden, wobei die mechanische Belastung der fragilen geförderten stabförmigen Artikel im Übergabebereich oder im Übergabepunkt zwischen zwei benachbarten Fördertrommeln herabgesetzt oder minimiert ist, wodurch die zu fördernden Artikel schonend von Fördertrommel zur nachfolgenden Fördertrommel übergeben werden.

Durch die Verwendung von beibehaltenen Fördertrommeln von stabförmigen Artikel der ersten Art und für die Artikel der zweiten Art und von austauschbaren Fördertrommeln, wobei die beibehaltenen Fördertrommeln und die ausgetauschten Fördertrommeln im Wechsel in Förderrichtung der stabförmigen Artikel alternierend angeordnet sind, wird eine schonende Übergabe der stabförmigen Artikel zwischen einer Artikel abgebenden Fördertrommel und einer Artikel aufnehmenden Fördertrommel erreicht, da jeweils eine austauschbare Fördertrommel für die Förderung von stabförmigen Artikeln der ersten Art und eine zweite austauschbare Fördertrommel für die Förderung der stabförmigen Artikel der zweiten Art bereitgestellt wird.

Beispielsweise wird ein schneller Produktwechsel an einer Filteransetzmaschine dadurch ermöglicht, dass bei einem Wechsel der Herstellung von Filterzigaretten mit einem ersten Durchmesser von beispielsweise 8 mm (als stabförmiger Artikel erster Art) zu herzustellenden Filterzigaretten mit einem Durchmesser von 5 mm (als Artikel einer zweiten Art) durch den Austausch nur jeder zweiten Fördertrommel eines Trommellaufes die Abstände der benachbarten Fördertrommeln im Übergabebereich derart angepasst werden oder sind, dass die stabförmigen Artikel sicher und beschädigungsfrei von einer Fördertrommel an eine nachfolgende Fördertrommel übergeben werden.

Nach Beendigung der Produktion von stabförmigen Artikeln einer ersten Art werden für die Förderung der stabförmigen Artikel der zweiten Art die austauschbaren Fördertrommeln ausgetauscht.

Unter stabförmigen Artikeln der Tabak verarbeitenden Industrie im Rahmen der Erfindung werden stabförmige Gegenstände, wie z.B. Zigaretten, Filterstäbe oder Filterstopfen oder deren (stabförmige) Komponenten verstanden.

Unter dem Begriff "stabförmige Artikel einer ersten Art" wird eine bestimmte Sorte an zu fördernden stabförmigen Gegenständen verstanden, die einen vorbestimmten Durchmesser aufweisen und beispielsweise an einer Filteransetzmaschine queraxial gefördert werden. Unter dem Begriff "stabförmige Artikel einer zweiten Art" wird eine vorbestimmte (zweite) Sorte an zu fördernden stabförmigen Gegenständen der Tabak verarbeitenden Industrie verstanden, die einen vorbestimmten Durchmesser aufweisen und beispielsweise an einer Filteransetzmaschine queraxial gefördert werden und sich im Durchmesser von den stabförmigen Artikeln der ersten Art unterscheiden.

Dabei ist es im Rahmen der Erfindung vorgesehen, dass bei den geförderten stabförmigen Artikeln die Längen der Artikel unterschiedlich oder gleich sind oder sein können.

Bei einem Produktionswechsel oder Formatwechsel an einer Filteransetzmaschine von zu fördernden oder geförderten stabförmigen Artikeln einer ersten Art zu stabförmigen Artikeln einer zweiten Art bestehen daher Unterschiede im Durchmesser der zu fördernden stabförmigen Artikel.

Vorteilhafterweise werden gemäß einer bevorzugten Ausgestaltung des Verfahrens die stabförmigen Artikel der ersten Art und die stabförmigen Artikel der zweiten Art im Wechsel auf der beibehaltenen Fördertrommel gefördert, wobei die Durchmesser und/oder die Konturen der, vorzugsweise nutförmigen oder U-förmigen, Aufnahmemulden der beibehaltenen Fördertrommel konstant bleiben.

Ferner zeichnet sich eine bevorzugte Ausführung des Verfahrens dadurch aus, dass die stabförmigen Artikel der ersten Art und die stabförmigen Artikel der zweiten Art im Wechsel auf der ersten austauschbaren Fördertrommel und der zweiten austauschbaren Fördertrommel gefördert werden, wobei die Durchmesser und/oder die Konturen der, vorzugsweise nutförmigen oder U-förmigen, Aufnahmemulden der ersten austauschbaren Fördertrommel für die zu fördernden stabförmigen Artikel der ersten Art sich von den Durchmessern und/oder den Konturen der, vorzugsweise nutförmigen oder U-förmigen, Aufnahmemulden der zweiten austauschbaren Fördertrommel für die zu fördernden stabförmigen Artikel der zweiten Art unterscheiden.

Dazu ist in einer Ausgestaltung außerdem vorgesehen, dass die Positionen der Rotationsachsen der austauschbaren und nicht-austauschbaren Fördertrommeln bei Förderung der stabförmigen Artikel der ersten Art und bei Förderung der stabförmigen Artikel der zweiten Art unverändert bleiben.

Ferner ist bei einer Anordnung zum Fördern von stabförmigen Artikeln der Tabak verarbeitenden Industrie, insbesondere Filterzigaretten oder deren stabförmigen Komponenten, mit mehreren, um jeweils eine eigene Rotationsachse rotierenden oder rotierbaren Fördertrommeln zur queraxialen Förderung von stabförmigen Artikeln der Tabak verarbeitenden Industrie, wobei die Fördertrommeln in queraxialer Förderrichtung der stabförmigen Artikel hintereinander angeordnet sind, wobei die Fördertrommeln zur Aufnahme von stabförmigen Artikeln jeweils mit Aufnahmemulden ausgebildet sind, vorgesehen, dass bei einem Wechsel der auf den Fördertrommeln zu fördernden oder geförderten stabförmigen Artikel einer ersten Art mit einem vorbestimmten Durchmesser zu stabförmigen Artikeln einer zweiten Art mit einem vorbestimmten Durchmesser, wobei sich die stabförmigen Artikel einer ersten Art von den stabförmigen Artikeln einer zweiten Art im Durchmesser unterscheiden, für die Förderung von stabförmigen Artikeln einer zweiten Art mit einem vorbestimmten Durchmesser unter Beibehaltung einer Fördertrommel eine zur beibehaltenen Fördertrommel benachbarte, insbesondere stabförmige Artikel abgebende oder stabförmige Artikel aufnehmende, erste austauschbare Fördertrommel durch eine zweite austauschbare Fördertrommel austauschbar ist, so dass bei Förderung von stabförmigen Artikeln der ersten Art die Teilkreisbögen oder Kreisbögen der Mittenlängsachsen der stabförmigen Artikel der ersten Art auf der beibehaltenen Fördertrommel und die Teilkreisbögen sowie Kreisbögen der Mittenlängsachsen der stabförmigen Artikel der ersten Art auf der ersten austauschbaren Fördertrommel im Übergabebereich sich berühren und nach einem Austausch der austauschbaren Fördertrommel durch die weitere Fördertrommel bei Förderung von stabförmigen Artikeln der zweiten Art die Teilkreisbögen oder Kreisbögen der Mittenlängsachsen der stabförmigen Artikel der zweiten Art auf der beibehaltenen Fördertrommel und die Teilkreisbögen oder Kreisbögen der Mittenlängsachsen der stabförmigen Artikel der zweiten Art auf der zweiten austauschbaren Fördertrommel im Übergabebereich sich berühren.

Die Förderanordnung bzw. Fördereinrichtung zum Fördern der stabförmigen Artikel weist mehrere hintereinander angeordnete Fördertrommeln auf, so dass die queraxial hintereinander in Reihe(n) angeordneten, stabförmigen Artikel queraxial gefördert werden. Insbesondere ist die Anordnung Teil einer Maschine der Tabak verarbeitenden Industrie, insbesondere Filteransetzmaschine.

Dazu ist bei der Förderanordnung vorgesehen, dass die Positionen der Rotationsachsen der Fördertrommeln bei Förderung der stabförmigen Artikel der ersten Art und bei Förderung der stabförmigen Artikel der zweiten Art unverändert bleiben.

Insbesondere sind die beibehaltenen d.h. nicht-austauschbaren Fördertrommeln mit jeweils einem konstanten Muldendurchmesser und/oder einer konstanten Muldenkontur der Aufnahmemulden für die stabförmigen Artikel der ersten Art und für die stabförmigen Artikel der zweiten Art ausgebildet.

Überdies zeichnet sich die Anordnung dadurch aus, dass die Durchmesser und/oder die Konturen der, vorzugsweise nutförmigen oder U-förmigen, Aufnahmemulden der ersten austauschbaren Fördertrommel für die zu fördernden stabförmigen Artikel der ersten Art und die Durchmesser und/oder die Konturen der, vorzugsweise nutförmigen oder U-förmigen, Aufnahmemulden der zweiten austauschbaren Fördertrommel für die zu fördernden stabförmigen Artikel der zweiten Art unterschiedlich sind.

Zudem ist gemäß einer bevorzugten Ausgestaltung vorgesehen, dass bei Verwendung von n-ungeradzahligen (n = 3, 5, 7, ...) Fördertrommeln bei einem Wechsel der zu fördernden stabförmigen Artikel ((n-1)/2) Fördertrommeln ausgetauscht werden oder sind oder dass bei Verwendung von m-geradzahligen (m = 2, 4, 6, ...) Fördertrommeln m/2 Fördertrommeln ausgetauscht werden oder sind.

Ferner ist eine Maschine der Tabak verarbeitenden Industrie, insbesondere Filteransetzmaschine, zur Herstellung von stabförmigen Artikeln der Tabak verarbeitenden Industrie, insbesondere Filterzigaretten, mit einer voranstehend beschriebenen Anordnung zum Fördern von stabförmigen Artikeln ausgebildet. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Filteransetzmaschine zum Herstellen von Filterzigaretten in einer Vorderansicht,
- Fig. 2a bis 2c: schematisch jeweils eine Ansicht einer Anordnung von Fördertrommeln einer Filteransetzmaschine.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

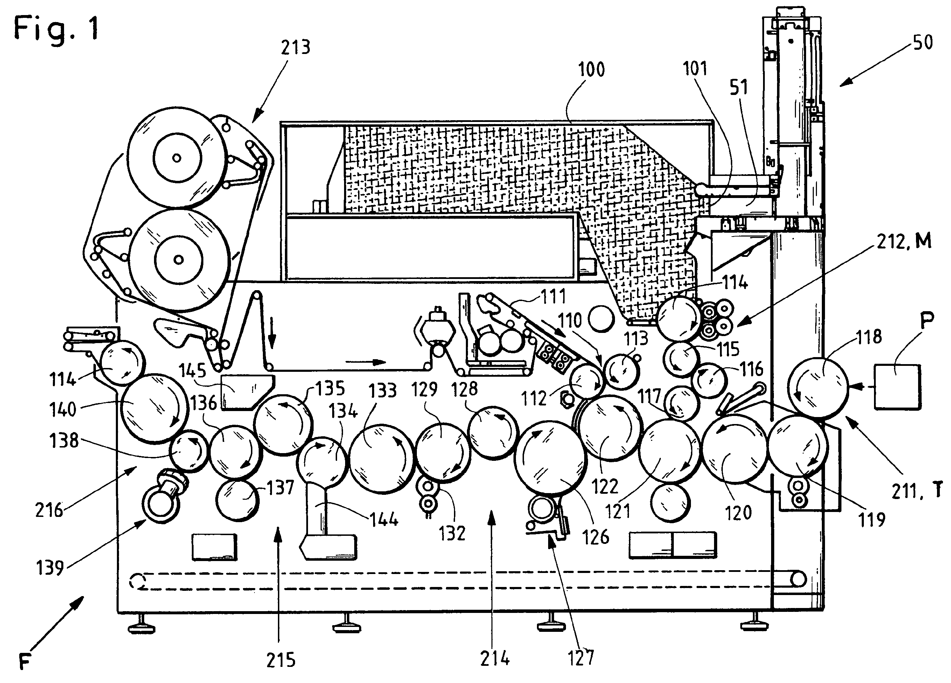

In Fig. 1 ist eine Filteransetzmaschine F in einer Vorderansicht ausschnittsweise dargestellt, wobei die Filteransetzmaschine F über eine Trommelanordnung T zur Zuführung von Tabakstöcken von einer schematisch eingezeichneten Zigarettenstrangmaschine P Tabakstöcke doppelter Gebrauchslänge empfängt.

Eine Zigarettenstrangmaschine ist unter der Bezeichnung "PRO-TOS" der HAUNI Maschinenbau AG, Hamburg, bekannt. Unter der Bezeichnung "MAX" ist eine Filteransetzmaschine der HAUNI Maschinenbau AG, Hamburg, als Maschine der Tabak verarbeitenden Industrie bekannt.

Die in Figur 1 schematisch gezeigte Filteransetzmaschine F weist verschiedene Funktionseinheiten auf: eine Tabakstockzufuhreinrichtung 211 mit einer Trommelanordnung T, eine Filterzufuhreinrichtung 212 mit einer Trommelanordnung M, eine Belagpapierzufuhreinrichtung 213, eine Zigarettenherstelleinrichtung 214, eine Zigarettenprüfeinrichtung 215 sowie eine Zigarettenabgabeeinrichtung 216.

Die Trommelanordnung T der Tabakstockzufuhreinrichtung 211 weist mehrere Fördertrommeln 118, 119, 120 auf. Nach der Übergabe der doppelt langen Tabakstöcke von der Zigarettenstrangmaschine P an eine Übernahmetrommel 118 werden die doppelt langen Tabakstöcke queraxial gefördert und an eine Schneidtrommel 119 übergeben, auf der die doppelt langen Tabakstöcke mittels eines an der Schneidtrommel 119 angeordneten Schneidmessers in einfach lange Tabakstöcke geschnitten werden. Von der Schneidtrommel 119 werden die Tabakstöcke einfacher Gebrauchslänge an eine Spreiztrommel 120 übergeben, auf der die geschnittenen Tabakstockpaare längsaxial voneinander beabstandet bzw. gespreizt werden. Anschließend werden die längsaxial beabstandeten Tabakstockpaare zur Zusammenstelltrommel 121 transportiert.

Auf ihrem Förderweg zu einer Zusammenstelltrommel 121 werden die Tabakstöcke doppelter Gebrauchslänge geschnitten und längsaxial gespreizt. Auf der Zusammenstelltrommel 121 werden doppeltlange Filterstopfen über eine weitere Trommelanordnung M der Filterzufuhreinrichtung 212 transportiert, die jeweils zwischen zwei längsaxial beabstandete Tabakstöcke eingefügt werden. Hierdurch wird auf der Zusammenstelltrommel 121 eine Folge von queraxial hintereinander angeordneten Tabakstock-Filterstopfen-Tabakstock-Gruppen gebildet.

Um doppeltlange Filterstopfen zwischen die längsaxial beabstandeten Tabakstockpaare auf der Zusammenstelltrommel 121 einzulegen bzw. anzuordnen, verfügt die Trommelanordnung M über eine Entnahmetrommel 114, mittels der Filterstäbe aus einem Filterstabmagazin 100 entnommen werden und unter Verwendung von an der Entnahmetrommel 114 angeordneten Schneidmessern in Filterstopfen doppelter Länge geschnitten werden. Anschließend werden die Filterstopfen an eine Spreiztrommel 115 und eine nachfolgende Staffeltrommel 116 übergeben. Die gestaffelten Filterstopfen doppelter Länge werden anschließend von der Staffeltrommel 116 an eine nachfolgende Einlegetrommel 117 übergeben und queraxial zu der Zusammenstelltrommel 121 gefördert, so dass auf der Zusammenstelltrommel 121 Artikelgruppen aus Tabakstock-Filterstopfen-Tabakstock-Gruppen gebildet werden.

Die zusammengestellten Artikelgruppen aus Tabakstock-Filterstopfen-Tabakstock-Gruppen werden von der Zusammenstelltrommel 121 an eine Fördertrommel 122 übergeben. Gleichzeitig werden von einem Belagapparat 110 der Belagpapierzufuhreinrichtung 213 Belagpapierblättchen den zusammengestellten Tabakstock-Filterstopfen-Tabakstock-Gruppen synchron zugeführt. In DE-C-39 18 137 ist ausführlich ein Belagapparat beispielsweise beschrieben, der vollumfänglich in den Inhalt der vorliegenden Anmeldung aufgenommen wird.

Ein beleimter und geförderter Belagpapierstreifen 111 wird hierbei im Belagapparat 110 auf einer Schneidtrommel 112 von den Messern einer Messertrommel 113 in Belagblättchen bzw. Verbindungsblättchen geschnitten. Die geschnittenen Verbindungsblättchen werden jeweils an die Artikelgruppen bzw. Tabakstock-Filterstopfen-Tabakstock-Gruppen auf der Fördertrommel 122 übergeben bzw. angeheftet.

Nach dem Anheften der geschnittenen und der einzelnen Verbindungsblättchen an jeweils eine Artikelgruppe werden die Artikelgruppen weiter zu einer nachfolgenden Rolltrommel 126 und einer Rolleinrichtung 127 transportiert, mittels der die Verbindungsblättchen vollständig um die Tabakstock-Filterstopfen-TabakstockGruppen herumgewickelt werden. Die Rolleinrichtung 127 besteht in einer Ausgestaltung aus einem Stegrad, einer Rollhand mit einer Rollfläche und ausgangsseitig einer Rollwalze, wobei die Rollfläche und die Rolltrommel 126 einen Rollkanal bilden, in dem Artikelgruppen mit den Verbindungsblättchen umwickelt werden, womit doppeltlange Filterzigaretten gebildet werden.

Die doppeltlangen Filterzigaretten werden nachfolgend an eine Fördertrommel 128 und danach an eine als Schneidtrommel ausgebildete Fördertrommel 129 übergeben und für den weiteren Bearbeitungsprozess an einer Filteransetzmaschine bereitgestellt. An einer Schneidtrommel 129 ist ein Schneidmesser 132 angeordnet, welches aus den doppeltlangen Filterzigaretten durch einen mittigen Trennschnitt Filterzigaretten einfacher Gebrauchslänge herstellt.

Die Filterzigaretten einfacher Gebrauchslänge werden anschließend von der Schneidtrommel 129 an eine Spreiztrommel 133 übergeben. Auf der Spreiztrommel 133 werden die Filterzigarettenpaare längsaxial voneinander beabstandet und anschließend an eine erste doppelbahnige Prüftrommel 134 übergeben. An der Prüftrommel 134 ist ein erstes Prüforgan 144 angeordnet, welches die Filterzigaretten einer ersten Prüfung, z. B. einer Kopfendenprüfung, unterzieht.

Im Rahmen der Erfindung ist es möglich, dass die hergestellten Filterzigaretten an dem ersten Prüforgan 144 einer Dichtigkeitsprüfung und/oder einer Kopfendenprüfung und/oder einer Ventilationsprüfung unterzogen werden. Darüber hinaus ist es im Rahmen der Erfindung möglich, dass mittels des Prüforgans 144 eine optische Prüfung der Zigaretten auf der Trommel 134 durchgeführt wird.

Anschließend werden die Zigaretten von der Prüftrommel 134 an eine nachfolgende zweite Prüftrommel 135 übergeben, an der ein zweites Prüforgan 145 angeordnet ist, um die Zigaretten weiteren Qualitätsprüfungen und/oder mindestens einer der zuvor genannten an der Prüftrommel 134 nicht durchgeführten Prüfung zu unterziehen.

Von der Prüftrommel 135 werden die Filterzigaretten an eine Fördertrommel 136 übergeben. An der Fördertrommel 136 ist eine Probeentnahmetrommel 137 angeordnet, um gezielt einzelne Stichproben aus dem Artikelstrom der fertig hergestellten Filterzigaretten zu entnehmen.

Von der Fördertrommel 136 werden die beiden gebildeten Reihen mit queraxial hintereinander angeordneten Filterzigaretten einfacher Gebrauchslänge an eine Wendetrommel 138 mit einer an der Wendetrommel 138 angeordneten Wendeeinrichtung 139 übergeben, so dass bei Abgabe der Filterzigaretten von der Wendetrommel 138 an eine nachfolgende Fördertrommel 140 die Filterzigaretten in einer Reihe hintereinander queraxial angeordnet bzw. gefördert werden. Von der Fördertrommel 140 werden anschließend die hergestellten Filterzigaretten an eine Abgabetrommel 141 abgegeben, mittels der die Filterzigaretten an ein Ablegerband übergeben werden.

In dem Filtermagazin 100 werden die für die Filterzigarettenherstellung erforderlichen Filterstäbe bevorratet bereitgestellt, wobei die Filterstäbe über eine seitlich am Filtermagazin 100 angeordnete, Zuführeinrichtung 50 für die Filterstäbe befüllt werden. Mittels der Zuführeinrichtung 50 werden an der mit einem Einlass 101 ausgebildeten Zuführseite des Filtermagazins 100 als stabförmige Artikel Filterstäbe in den Vorratsraum bzw. Speicherraum des Filtermagazins 100 unter queraxialer Förderung in das Filtermagazin 100 eingebracht.

Die Zuführeinrichtung 50 verfügt über einen horizontalen Förderkanal 51, der am Einlass 101 des Filtermagazins 100 mündet und über den die von der Zuführeinrichtung 50 bereitgestellten stabförmigen Filterstäbe in das Filtermagazin 100 hineingefördert werden. Hierzu verfügt der Förderkanal 51 an seiner Unterseite über wenigstens ein Förderband, so dass die auf dem Förderband des Förderkanals 51 abgelegten Filterstäbe unter queraxialer Förderung der Filterstäbe über den Einlass zur Befüllung des Filtermagazins 100 hineingeschoben werden.

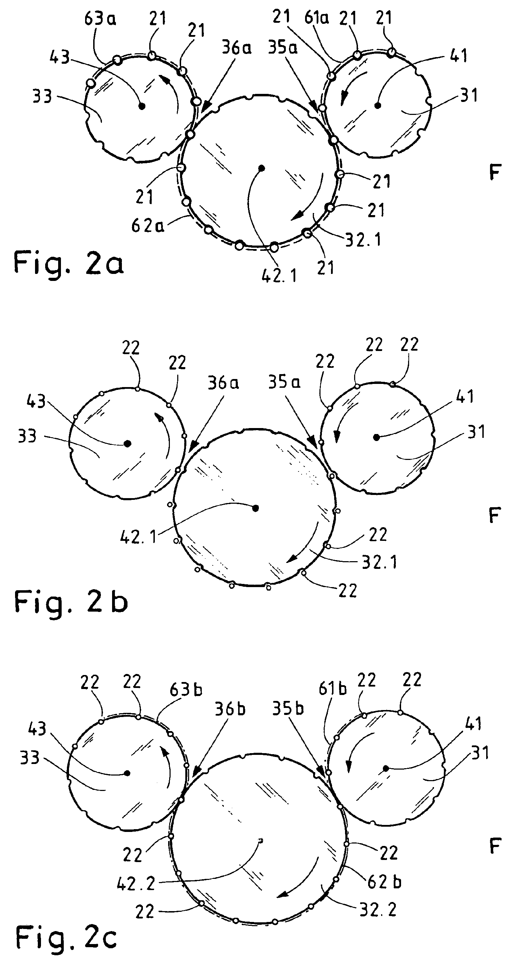

In den Fig. 2a bis 2c ist jeweils eine Anordnung von jeweils drei Fördertrommeln 31, 32.1, 33 bzw. 31, 32.2, 33 in einer schematisierten Ansicht dargestellt, wobei die Anordnung der Fördertrommeln 31, 32.1, 33 bzw. 31, 32.2, 33 Bestandteil einer voranstehend beschriebenen Filteransetzmaschine F sind, die in Förderrichtung von stabförmigen Artikeln bezogen auf die queraxiale Förderrichtung der stabförmigen Artikel hintereinander angeordnet sind.

Die Fördertrommeln 31, 33 gemäß den in den Fig. 2a bis 2c gezeigten Trommelanordnungen weisen auf ihren Trommelkörpern jeweils Aufnahmemulden zur Aufnahme von stabförmigen Artikeln auf. Die Aufnahmemulden sind dabei nutförmig oder U-förmig auf den Trommelkörpern mit jeweils einem konstanten Durchmesser und/oder einer konstanten Kontur ausgebildet.

Ferner weisen die Fördertrommeln 31, 33 jeweils einen konstanten Teilungsabstand auf, d.h. dass der Abstand von zwei Muldenmittenachsen von jeweils zwei benachbarten Aufnahmemulden konstant ist. Mit anderen Worten: der Teilungsabstand zwischen zwei Aufnahmemulden der Fördertrommeln 31, 33 ist nicht variierbar. Außerdem sind die Aufnahmemulden der Fördertrommeln 31, 33 in ihrer Form nicht veränderbar und weisen einen vorbestimmten festen Durchmesser und/oder eine feste Kontur auf.

Die in den Fig. 2a, 2b dargestellte Fördertrommel 32.1 zwischen den Fördertrommeln 31, 33 sowie die in Fig. 2c dargestellte Fördertrommel 32.2 sind austauschbare Fördertrommeln, wobei die gegeneinander austauschbaren Fördertrommeln 32.1 bzw. 32.2 jeweils einen konstanten Teilungsabstand aufweisen, wobei die Teilungsabstände zwischen zwei Aufnahmemulden der Fördertrommel 32.1 sich von den Teilungsabständen zwischen zwei Aufnahmemulden der Fördertrommel 32.2 unterscheiden. Ferner sind die Aufnahmemulden der jeweiligen Fördertrommeln 32.1, 32.2 ebenfalls nutförmig oder U-förmig auf den Trommelkörpern mit jeweils einem festen, d.h. konstanten, Durchmesser und/oder einer konstanten Kontur ausgebildet.

Die Fördertrommeln 31, 32.1 sowie 32.2, 33 werden von einem (hier nicht dargestellten) Antrieb oder jeweils von einzelnen Antrieben angetrieben, so dass die Fördertrommeln 31, 32.1 bzw. 32.2, 33 um ihre jeweiligen Rotationsachsen 41, 42.1 bzw. 42.2, 43 gedreht werden.

In Fig. 2a ist schematisch dargestellt, dass die Fördertrommeln 31, 32.1, 33 stabförmige Artikel 21 (als stabförmige Artikel einer ersten Art) fördern, wobei in einem Übergabebereich 35a die stabförmigen Artikel 21 von der Fördertrommel 31 an die nachfolgende Fördertrommel 32.1 übergeben werden. Anschließend werden die stabförmigen Artikel 21 auf der Fördertrommel 32.1 zu einem zweiten Übergabebereich 36a zwischen der Fördertrommel 32.1 und der nachfolgenden Fördertrommel 33 gefördert, so dass im Übergabebereich 36a die stabförmigen Artikel 21 an die Fördertrommel 33 übergeben werden.

Die Fördertrommeln 31, 32.1, 33 (vgl. Fig. 2a) sind für die Förderung der stabförmigen Artikel 21 derart angeordnet sowie ausgerichtet, dass in den Übergabebereichen 35a, 36a eine produktschonende Übergabe der Artikel 21 erfolgt.

In Fig. 2a sind jeweils die (Teil-)Kreisbögen 61a, 62a, 63a der Mittenlängsachsen der auf den jeweiligen Fördertrommeln 31, 32.1, 33 geförderten stabförmigen Artikel 21 ausschnittsweise schematisch eingezeichnet. Wie aus Fig. 2a hervorgeht, berühren sich die Kreisbögen 61a und 62a der Mittenlängsachsen der stabförmigen Artikel 21 im Übergabebereich 35a, wodurch die stabförmigen Artikel 21 schonend von der Fördertrommel 31 an die Fördertrommel 32.1 übergeben werden. Anschließend werden die stabförmigen Artikel 21 in den Übergabebereich 36a gefördert, wobei sich die Kreisbögen 62a und 63a der Mittenlängsachsen der auf den Fördertrommeln 32.1 und 33 geförderten stabförmigen Artikel im Übergabebereich 36a berühren.

An der Filteransetzmaschine F werden Filterzigaretten hergestellt, wobei als stabförmige Artikel 21 Tabakstöcke und/oder Filterstopfen einzeln oder gruppenweise gefördert werden. Hierbei werden an der Filteransetzmaschine Filterzigaretten mit einem vorbestimmten Durchmesser hergestellt. Nach Beendigung der Produktion an der Filteransetzmaschine werden die Fördertrommeln 31, 32.1, 33 angehalten.

Um anschließend an der Filteransetzmaschine F Filterzigaretten mit einem kleineren Durchmesser herzustellen, werden die Fördertrommeln 31, 33 beibehalten d.h. nicht ausgetauscht, wobei die Fördertrommeln 31, 33 in ihren geometrischen Ausbildungen nicht verändert werden. Bei der Förderung von stabförmigen Artikeln 22 (als stabförmige Artikel einer zweiten Art), die einen kleineren Durchmesser als die stabförmigen Artikel 21 gemäß der in Fig. 2a dargestellten Ausführungsform haben, würde unter Beibehaltung der Fördertrommeln 31, 32.1, 33 (vgl. Fig. 2b) der Abstand zwischen den Fördertrommeln 31, 32.1 in den Übergabebereichen 35a, 36a vergrößert sein, so dass bei der Übergabe der stabförmigen Artikel 22 in den vergrößerten Übergabebereichen 35a, 36a für die kleineren stabförmigen Artikel 22 diese ungewollt mechanisch beansprucht werden, da der Durchmesser der Kreisbögen der Mittenlängsachsen der stabförmigen Artikel 22 auf der Fördertrommel 31, 32.1, 33 kleiner ist als der Durchmesser der Kreisbögen 61a, 62a, 63a der Mittenlängsachsen der stabförmigen Artikel 21, die einen größeren Durchmesser aufweisen (vgl. Fig. 2a, 2b).

Um für einen Formatwechsel eine schonende Übergabe der zu fördernden stabförmigen Artikel 22 von der Fördertrommel 31 an eine nachfolgende Fördertrommel zu ermöglichen, wird die Fördertrommel 31 beibehalten und während die Fördertrommel 32.1 (vgl. Fig. 2b) gegen eine weitere Fördertrommel 32.2 ausgetauscht wird, so dass bei einer Übergabe der stabförmigen Artikel 22 von der Fördertrommel 31 an die Fördertrommel 32.2 die im Durchmesser kleineren stabförmigen Artikel 22 im Übergabebereich 35b und nachfolgend zu der ebenfalls beibehaltenen Fördertrommel 33 gefördert werden und schonend an diese im Übergabebereich 36b abgegeben werden.

Hierbei ist die Austauschfördertrommel bzw. Fördertrommel 32.2 derart angepasst, dass im Übergabebereich 35b und im Übergabebereich 36b für die stabförmigen Artikel 22 die Kreisbögen 61b und 62b sowie 62b und 63b der Mittenlängsachsen der auf den jeweiligen Fördertrommeln 31, 32.2, 33 geförderten stabförmigen Artikel 22 sich berühren, wodurch die stabförmigen Artikel 32.1 produktschonend von einer Fördertrommel an die nachfolgende Fördertrommel übergeben werden.

Aufgrund der konstanten Durchmesser der Aufnahmemulden und/oder festen, d.h. nicht veränderbaren Kontur der Aufnahmemulden der Fördertrommeln 31, 33 sind die Durchmesser der Kreisbögen 61 a, 63a sowie 61 b, 63b der Mittenlängsachsen der stabförmigen Artikel 21, 22 bei Variation der Durchmesser der zu fördernden stabförmigen Artikel 21 bzw. 22 verschieden. Um die mechanische Beanspruchung der stabförmigen Artikel 22, die einen kleineren Durchmesser als die stabförmigen Artikel 21 aufweisen, bei Förderung an der Filteransetzmaschine F herabzusetzen, wird bei einem Produktwechsel die Fördertrommel 32.1 für im Durchmesser größere Artikel 21 gegen eine austauschbare Fördertrommel 32.2 für im Durchmesser kleinere Artikel 22 ausgetauscht, wobei der Kreisbogen 62b der Mittenlängsachsen der kleineren stabförmigen Artikel 22 bei einem Austausch der Fördertrommeln vergrößert wird, so dass die Kreisbögen der Mittenlängsachsen der zu fördernden stabförmigen Artikel sich in den Übergabebereichen annähern bzw. berühren.

Bei einem Austausch der Fördertrommel 32.1 gegen eine Fördertrommel 32.2 entspricht die Rotationsachse 42.1 der auszutauschenden Fördertrommel 32.1 (vgl. Fig. 2a) der Rotationsachse 42.2 der Austauschtrommel 32.2. Mit anderen Worten: Der Abstand zwischen den Rotationsachsen 41, 42.1, 42.2 und 43 der entsprechenden Fördertrommeln 31, 32.1, 32.2 und 33 werden bei einem Austausch der Fördertrommel 32.1 und damit die Positionen der Rotationsachsen 41, 42.1, 42.2 und 43 an der Filteransetzmaschine F beibehalten.

Bei einem Formatwechsel von kleineren zu größeren Durchmessern der stabförmigen herzustellenden Artikel wird bei einem Austausch der Fördertrommel 32.1 bzw. 32.2 bei der Austauschtrommel der Radius der Mittenlängsachsen der zu fördernden (größeren) stabförmigen Artikel entsprechend verkleinert werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 21: stabförmige Artikel
- 22: stabförmige Artikel
- 31: Fördertrommel
- 32.1, 32.2: Fördertrommel
- 33: Fördertrommel
- 35a, 35b: Übergabebereich
- 36a, 36b: Übergabebereich
- 41: Rotationsachse
- 42.1,42.2: Rotationsachse
- 43: Rotationsachse
- 43': Rotationsachse
- 50: Zuführeinrichtung
- 51: Förderkanal
- 100: Filtermagazin
- 101: Einlass
- 110: Belagapparat
- 111: Belagpapierstreifen
- 112: Saugwalze
- 113: Messerwalze
- 114: Entnahmetrommel
- 115: Spreiztrommel
- 116: Staffeltrommel
- 117: Einlegetrommel
- 118: Übernahmetrommel
- 119: Schneidtrommel
- 120: Spreiztrommel
- 121: Zusammenstelltrommel
- 122: Fördertrommel
- 126: Rolltrommel
- 127: Rolleinrichtung
- 128: Fördertrommel
- 129: Schneidtrommel
- 132: Schneidmesser
- 133: Spreiztrommel
- 134: Prüftrommel
- 135: Prüftrommel
- 136: Fördertrommel
- 137: Entnahmetrommel
- 138: Wendetrommel
- 139: Wendeeinrichtung
- 140: Fördertrommel
- 141: Abgabetrommel
- 144: Prüforgan
- 145: Prüforgan
- 211: Tabakstockzufuhreinrichtung
- 212: Filterzufuhreinrichtung
- 213: Belagpapierzufuhreinrichtung
- 214: Zigarettenherstelleinrichtung
- 215: Zigarettenprüfeinrichtung
- 216: Zigarettenabgabeeinrichtung

- F: Filteransetzmaschine
- M: Trommelanordnung (Filterstopfen)
- P: Zigarettenstrangmaschine
- T: Trommelanordnung (Tabakstöcke)

## Patentansprüche

1. Verfahren zum Fördern von stabförmigen Artikeln der Tabak verarbeitenden Industrie (21, 22), insbesondere Filterzigaretten oder deren stabförmigen Komponenten, wobei die stabförmigen Artikel (21, 22) in Aufnahmemulden von Fördertrommeln (31, 32.1, 32.2, 33) unter Rotation der Fördertrommeln (31, 32.1, 32.2, 33) queraxial gefördert werden, wobei die um jeweils eine eigene Rotationsachse (41, 42.1, 42.2, 43) rotierenden oder rotierbaren Fördertrommeln (31, 32.1, 32.2, 33) in queraxialer Förderrichtung der stabförmigen Artikel (21, 22) hintereinander angeordnet sind, wobei die in wenigstens einer Reihe queraxial hintereinander angeordneten stabförmigen Artikel (21, 22) von einer Fördertrommel (31, 32.1, 32.2, 33) an eine nachfolgende Fördertrommel (31, 32.1, 32.2, 33) übergeben werden, **dadurch gekennzeichnet, dass** bei einem Wechsel der zu fördernden stabförmigen Artikel (21, 22) von stabförmigen Artikeln (21) einer ersten Art mit einem vorbestimmten Durchmesser zu stabförmigen Artikeln (22) einer zweiten Art mit einem vorbestimmten Durchmesser, wobei der Durchmesser der Artikel (21) der ersten Art und der Durchmesser der Artikel (22) der zweiten Art sich voneinander unterscheiden, eine für die Förderung der stabförmigen Artikel (21, 22) vorgesehene Fördertrommel (31, 33) beibehalten wird und eine zur beibehaltenen Fördertrommel (31, 33) benachbarte, insbesondere stabförmige Artikel abgebende oder stabförmige Artikel aufnehmende, erste austauschbare Fördertrommel (32.1) durch eine zweite austauschbare Fördertrommel (32.2) ausgetauscht wird, so dass bei Förderung von stabförmigen Artikeln (21) der ersten Art die Teilkreisbögen der Mittenlängsachsen der stabförmigen Artikel (21) der ersten Art auf der beibehaltenen Fördertrommel (32.1) und die Teilkreisbögen der Mittenlängsachsen der stabförmigen Artikel (21) der ersten Art auf der ersten austauschbaren Fördertrommel (32.1) im Übergabebereich (35a, 36a) sich berühren und nach einem Austausch der ersten austauschbaren Fördertrommel (32.1) durch die zweite austauschbare Fördertrommel (32.2) bei Förderung von stabförmigen Artikeln (22) der zweiten Art die Teilkreisbögen der Mittenlängsachsen der stabförmigen Artikel (22) der zweiten Art auf der beibehaltenen Fördertrommel (31, 33) und die Teilkreisbögen der Mittenlängsachsen der stabförmigen Artikel (22) der zweiten Art auf der zweiten austauschbaren Fördertrommel (32.2) im Übergabebereich (35b, 36b) sich berühren.

2. Verfahren nach Anspruch 1, **dadurch gekennzeichnet, dass** die stabförmigen Artikel (21) der ersten Art und die stabförmigen Artikel (22) der zweiten Art im Wechsel auf der beibehaltenen Fördertrommel (31, 33) gefördert werden, wobei die Durchmesser und/oder die Konturen der, vorzugsweise nutförmigen oder U-förmigen, Aufnahmemulden der beibehaltenen Fördertrommel (31, 33) konstant bleiben.

3. Verfahren nach Anspruch 1 oder 2, **dadurch gekennzeichnet, dass** die stabförmigen Artikel (21) der ersten Art und die stabförmigen Artikel (22) der zweiten Art im Wechsel auf der ersten austauschbaren Fördertrommel (32.1) und der zweiten austauschbaren Fördertrommel (32.2) gefördert werden, wobei die Durchmesser und/oder die Konturen der, vorzugsweise nutförmigen oder U-förmigen, Aufnahmemulden der ersten austauschbaren Fördertrommel (32.1) für die zu fördernden stabförmigen Artikel (21) der ersten Art sich von den Durchmessern und/oder den Konturen der, vorzugsweise nutförmigen oder U-förmigen, Aufnahmemulden der zweiten austauschbaren Fördertrommel (32.2) für die zu fördernden stabförmigen Artikel (22) der zweiten Art unterscheiden.

4. Verfahren nach einem der Ansprüche 1 bis 3, **dadurch gekennzeichnet, dass** die Positionen der Rotationsachsen der Fördertrommeln (31, 32.1, 32.2, 33) bei Förderung der stabförmigen Artikel (21) der ersten Art und bei Förderung der stabförmigen Artikel (22) der zweiten Art unverändert bleiben.

## Claims

1. Method for conveying rod-shaped articles of the tobacco-processing industry (21, 22), in particular filter cigarettes or rod-shaped components thereof, wherein the rod-shaped articles (21, 22) are conveyed in a transverse axial manner in accommodating troughs of conveyor drums (31, 32.1, 32.2, 33) as the conveyor drums (31, 32.1, 32.2, 33) rotate, wherein the conveyor drums (31, 32.1, 32.2, 33), which rotate or can rotate about a respective dedicated axis of rotation (41, 42.1, 42.2, 43), are arranged one behind the other in a transverse axial conveying direction of the rod-shaped articles (21, 22), wherein the rod-shaped articles (21, 22), which are arranged in a transverse axial manner one behind the other in at least one row, are transferred from one conveyor drum (31, 32.1, 32.2, 33) to a following conveyor drum (31, 32.1, 32.2, 33), **characterized in that**, in the event of a changeover of the rod-shaped articles (21, 22) to be conveyed, from rod-shaped articles (21) of a first type having a predetermined diameter to rod-shaped articles (22) of a second type having a predetermined diameter, wherein the diameter of the articles (21) of the first type and the diameter of the articles (22) of the second type differ from one another, one conveyor drum (31, 33) provided for conveying the rod-shaped articles (21, 22) is retained and a first exchangeable conveyor drum (32.1), which is adjacent to the retained conveyor drum (31, 33) and in particular hands over rod-shaped articles or receives rod-shaped articles, is replaced by a second exchangeable conveyor drum (32.2) so that during the conveying of rod-shaped articles (21) of the first type the pitch circle arcs of the central longitudinal axes of the rod-shaped articles (21) of the first type on the retained conveyor drum (32.1) and the pitch circle arcs of the central longitudinal axes of the rod-shaped articles (21) of the first type on the first exchangeable conveyor drum (32.1) touch one another in the transfer region (35a, 36a) and, after the first exchangeable conveyor drum (32.1) has been replaced by the second exchangeable conveyor drum (32.2), during the conveying of rod-shaped articles (22) of the second type the pitch circle arcs of the central longitudinal axes of the rod-shaped articles (22) of the second type on the retained conveyor drum (31, 33) and the pitch circle arcs of the central longitudinal axes of the rod-shaped articles (22) of the second type on the second exchangeable conveyor drum (32.2) touch one another in the transfer region (35b, 36b).

2. Method according to claim 1, **characterized in that** the rod-shaped articles (21) of the first type and the rod-shaped articles (22) of the second type are conveyed in an alternating fashion on the retained conveyor drum (31, 33), wherein the diameters and/or the contours of the preferably groove-shaped or U-shaped accommodating troughs of the retained conveyor drum (31, 33) remain constant.

3. Method according to claim 1 or 2, **characterized in that** the rod-shaped articles (21) of the first type and the rod-shaped articles (22) of the second type are conveyed in an alternating fashion on the first exchangeable conveyor drum (32.1) and the second exchangeable conveyor drum (32.2), wherein the diameters and/or the contours of the preferably groove-shaped or U-shaped accommodating troughs of the first exchangeable conveyor drum (32.1) for the rod-shaped articles (21) of the first type that are to be conveyed differ from the diameters and/or the contours of the preferably groove-shaped or U-shaped accommodating troughs of the second exchangeable conveyor drum (32.2) for the rod-shaped articles (22) of the second type that are to be conveyed.

4. Method according to any one of claims 1 to 3, **characterized in that** the positions of the axes of rotation of the conveyor drums (31, 32.1, 32.2, 33) when conveying the rod-shaped articles (21) of the first type and when conveying the rod-shaped articles (22) of the second type remain unchanged.

## Revendications

1. Procédé pour transporter des articles en forme de bâtonnets de l'industrie de transformation du tabac (21, 22), en particulier des cigarettes filtres ou leurs composants en forme de bâtonnets, les articles en forme de bâtonnets (21, 22) étant transportés, dans des cavités aménagées dans des tambours de transport (31, 32.1, 32.2, 33), transversalement lors de la rotation des tambours de transport (31, 32.1, 32.2, 33), les tambours de transport (31, 32.1, 32.2, 33), rotatifs ou pouvant tourner chacun autour d'un axe de rotation (41, 42.1, 42.2, 43) qui lui est propre, étant disposés les uns derrière les autres transversalement à la direction de transport des articles (21, 22) en forme de bâtonnets, les articles (21, 22) en forme de bâtonnets, disposés transversalement les uns derrière les autres au moins en une rangée, étant transférés d'un tambour de transport (31, 32.1, 32.2, 33) à un tambour de transport suivant (31, 32.1, 32.2, 33), **caractérisé en ce que**, lors d'un changement des articles en forme de bâtonnets (21, 22) à transporter d'articles (21) en forme de bâtonnets d'un premier type, ayant un diamètre prédéterminé, en articles (22) en forme de bâtonnets d'un deuxième type ayant un diamètre prédéterminé, le diamètre des articles (21) du premier type et le diamètre des articles (22) du deuxième type étant différents les uns des autres, un tambour de transport (31, 33) prévu pour le transport des articles en forme de bâtonnets (21, 22) est conservé, et un premier tambour de transport remplaçable (32.1) voisin du tambour de transport conservé (31, 33), en particulier cédant des articles en forme de bâtonnets ou recevant des articles en forme de bâtonnets, est remplacé par un deuxième tambour de transport (32.2) remplaçable, de telle sorte que, lors du transport d'articles en forme de bâtonnets (21) du premier type, les arcs de cercle partiels des axes longitudinaux des articles en forme de bâtonnets (21) du premier type sur le tambour de transport conservé (32.1) et les arcs de cercles partiels des axes longitudinaux des articles en forme de bâtonnets (21) du premier type sur le premier tambour de transport remplaçable (32.1) se touchent dans la zone de transfert (35a, 36a), et après un remplacement du premier tambour de transport remplaçable (32.1) par le deuxième tambour de transport remplaçable (32.2), lors du transport d'articles en forme de bâtonnets (22) du deuxième type, les arcs de cercle partiels des axes longitudinaux des articles en forme de bâtonnets (22) du deuxième type sur le tambour de transport conservé (31, 33) et les arcs de cercle partiels des axes longitudinaux des articles en forme de bâtonnets (22) du deuxième type sur le deuxième tambour de transport remplaçable (32.2) se touchent dans la zone de transfert (35b, 36b).

2. Procédé selon la revendication 1, **caractérisé en ce que** les articles en forme de bâtonnets (21) du premier type et les articles en forme de bâtonnets (22) du deuxième type sont alternativement transportés sur le tambour de transport conservé (31, 33), le diamètre et/ou le contour des cavités, de préférence en forme de rainures ou en forme de U, du tambour de transport conservé (31, 33), restant constant(s).

3. Procédé selon la revendication 1 ou 2, **caractérisé en ce que** les articles en forme de bâtonnets (21) du premier type et les articles en forme de bâtonnets (22) du deuxième type sont alternativement transportés sur le premier tambour de transport remplaçable (32.1) et le deuxième tambour de transport remplaçable (32.2), le diamètre et/ou le contour des cavités, de préférence en forme de rainure ou en forme de U, du premier tambour de transport remplaçable (32.1) pour les articles en forme de bâtonnets (21) du premier type à transporter se distinguant du diamètre et/ou du contour des cavités, de préférence en forme de rainure ou en forme de U, du deuxième tambour de transport remplaçable (32.2) pour les articles en forme de bâtonnets (22) du deuxième type à transporter.

4. Procédé selon l'une des revendications 1 à 3, **caractérisé en ce que** la position des axes de rotation des tambours de transport (31, 32.1, 32.2, 33) reste constante lors du transport des articles (21) en forme de bâtonnets du premier type et lors du transport des articles en forme de bâtonnets (22) du deuxième type.
